# EUROPEAN PATENT SPECIFICATION

(11) **EP 3 115 971 B1**
(45) Date of publication and mention of the grant of the patent: **03.06.2020**
(21) Application number: 16164073.5
(22) Date of filing: 06.04.2016
(51) Int. Cl.: G06T 19/00, G06T 15/04, A41H 3/00

(54) **METHOD AND APPARATUS FOR PROVIDING THREE-DIMENSIONAL DATA OF CLOTH**
VERFAHREN UND VORRICHTUNG ZUM BEREITSTELLEN DREIDIMENSIONALER DATEN VON KLEIDUNG
PROCÉDÉ ET APPAREIL POUR LA FOURNITURE DE DONNÉES TRIDIMENSIONNELLES D'UN VÊTEMENT

(30) Priority: 02.06.2015 US 201562169714 P; 09.09.2015 KR 20150127709
(43) Date of publication of application: 11.01.2017
(73) Proprietor: Samsung Electronics Co., Ltd., Gyeonggi-do 16677 (KR)
(72) Inventor: JU, Eun-jung, Seoul (KR); SHIN, Seung-ho, Gyeonggi-do (KR); JEONG, Ji-won, Gyeonggi-do (KR); SONG, Ji-hye, Gyeonggi-do (KR); HAN, Sun-young, Gyeonggi-do (KR); KWAK, Young-min, Gyeonggi-do (KR)
(74) Representative: Appleyard Lees IP LLP

(56) References cited:
- YANG LIU ET AL: "3D virtual garment design system", COMPUTER SUPPORTED COOPERATIVE WORK IN DESIGN, 2008. CSCWD 2008. 12TH INTERNATIONAL CONFERENCE ON, IEEE, PISCATAWAY, NJ, USA, 16 April 2008 (2008-04-16), pages 733-736, XP031268953, ISBN: 978-1-4244-1650-9

## Description

### BACKGROUND

### 1. Field

The present disclosure relates generally to three-dimensional (3D) cloth data providing methods, 3D cloth data providing apparatuses, and recording mediums storing programs for performing the 3D cloth data providing methods.

### 2. Description of Related Art

With the development of technology, various types of digital devices are widely used in the real life of persons. Along with the development and popularization of image processing technology, persons obtain information about articles from 3D images of the articles. For example, persons may obtain information about cloths from 3D data of the cloths.

However, the pictures of cloths taken by digital cameras to provide the visual information thereof may somewhat realistically represent the shapes of the cloths, but may have a limitation in realistically representing the fine structures of the cloths because failing to exceed the degree of representing the simple colors and shapes thereof.

The document of Yang Liu et al., "3D virtual Garment Design System", Proceedings of the 12th IEEE International Conference on Computer Supported Cooperative Work in Design, 16 April 2008, pages 733-736, ISBN 978-1-4244-1650-9, discloses a system for designing 2D cloth patches and converting them to 3D garment by virtual seaming.

### SUMMARY

According to the present invention there is provided an apparatus and method as set forth in the appended claims. Other features of the invention will be apparent from the dependent claims, and the description which follows.

The invention provides methods, apparatuses, and recording mediums for generating and providing three-dimensional (3D) data of clothes, comprising: acquiring a two-dimensional image of the clothes and images of panels, each panel representing a part of the clothes; identifying types of the panels based on shapes of the images of the panels; determining disposition information of the panels by comparing the 2D image of the clothes and the images of the panels based on the identified types; seaming the images of the panels according to the disposition information; and generating the 3D data of the clothes based on the seamed images.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram illustrating an example method for generating three-dimensional (3D) data of a cloth by a 3D cloth data providing apparatus;
FIG. 2 is a flowchart illustrating an example method for generating 3D data of a cloth by a 3D cloth data providing apparatus;
FIG. 3 is a flowchart illustrating an example method for generating 3D data of a cloth by a 3D cloth data providing apparatus;
FIG. 4 is a flowchart illustrating an example method for generating 3D data of a cloth by identifying the shapes of two-dimensional (2D) images of panels by a 3D cloth data providing apparatus;
FIGS. 5A and 5B are diagrams illustrating an example method for identifying a body panel by a 3D cloth data providing apparatus;
FIGS. 6A and 6B are diagrams illustrating an example method for identifying a body panel by a 3D cloth data providing apparatus;
FIGS. 7A and 7B are diagrams illustrating an example method for identifying a body panel by a 3D cloth data providing apparatus;
FIGS. 8A and 8B are diagrams illustrating an example method for identifying a sleeve panel by a 3D cloth data providing apparatus;
FIG. 9 is a diagram illustrating an example method for forming a database about each of panels from a 2D image of at least one cloth by a 3D cloth data providing apparatus;
FIG. 10 is a flowchart illustrating an example method for seaming images by a 3D cloth data providing apparatus;
FIG. 11 is a diagram illustrating an example method for seaming images by a 3D cloth data providing apparatus;
FIG. 12 is a flowchart illustrating an example method for disposing images by a 3D cloth data providing apparatus;
FIG. 13 is a diagram illustrating example basic regions in which images are disposed by a 3D cloth data providing apparatus;
FIG. 14 is a flowchart illustrating an example method for generating 3D data of a cloth using texture information of images by a 3D cloth data providing apparatus;
FIG. 15 is a diagram illustrating an example method for generating 3D data of a cloth using texture information by a 3D cloth data providing apparatus;
FIG. 16 is a flowchart illustrating an example method for generating 3D data of a cloth using shape information of the cloth worn by the user and texture information received from the user by a 3D cloth data providing apparatus;
FIG. 17 is a diagram illustrating an example method for generating 3D data of a cloth using shape information of the cloth worn by the user and texture information received from the user by a 3D cloth data providing apparatus;
FIG. 18 is a flowchart illustrating an example method for generating 3D data of a third cloth using images of panels about a first cloth and images of panels about a second cloth by a 3D cloth data providing apparatus;
FIG. 19 is a diagram illustrating an example method for generating 3D data of a third cloth using images of panels about a first cloth and images of panels about a second cloth by a 3D cloth data providing apparatus;
FIG. 20 is a block diagram illustrating an example configuration of a 3D cloth data providing apparatus; and
FIG. 21 is a block diagram illustrating another example configuration of a 3D cloth data providing apparatus.

### DETAILED DESCRIPTION

Reference will now be made in greater detail to example embodiments, examples of which are illustrated in the accompanying drawings, wherein like reference numerals refer to like elements throughout. In this regard, the present example embodiments may have different forms and should not be construed as being limited to the descriptions set forth herein. Accordingly, the example embodiments are merely described below, by referring to the figures, to explain aspects. As used herein, the term "and/or" includes any and all combinations of one or more of the associated listed items. Expressions such as "at least one of," or "one or more of," when preceding a list of elements, modify the entire list of elements and do not necessarily modify the individual elements of the list.

Terms used herein will be described in brief before the detailed description of the example embodiments.

As the terms used herein, so far as possible, widely-used general terms are selected in consideration of functions in the example embodiments; however, these terms may vary according to the intentions of those skilled in the art, the precedents, or the appearance of new technology. Also, in some cases, there may be terms that are arbitrarily selected, and the meanings thereof will be described in detail in the corresponding portions of the description. Therefore, the terms used herein are not simple terms and should be defined based on the meanings thereof and the overall description.

Throughout the description, when something is referred to as "including" a component, another component may be further included unless specified otherwise. Also, as used herein, the terms "units" and "modules" may refer to units that perform at least one function or operation, and the units may be implemented as hardware, firmware or software or a combination of hardware and software.

Hereinafter, example embodiments of the disclosure will be described in greater detail with reference to the accompanying drawings so that those of ordinary skill in the art may easily understand the disclosure. However, the disclosure may be embodied in many different forms and should not be construed as being limited to the example embodiments set forth herein. In addition, portions irrelevant to the description of the example embodiments may be omitted in the drawings to provide a more clear description, and like reference numerals will denote like elements throughout the description.

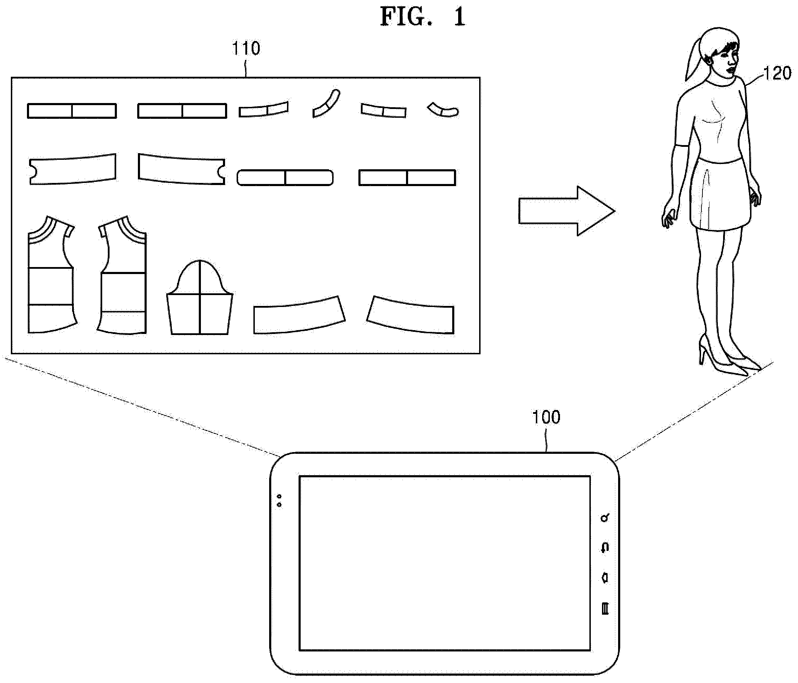

FIG. 1 is a conceptual diagram illustrating an example method for generating three-dimensional (3D) data 120 of a cloth by an apparatus 100 for providing 3D data 120 of a cloth (hereinafter referred to as a 3D cloth data providing apparatus 100).

According to an example embodiment, the 3D cloth data providing apparatus 100 may acquire two-dimensional (2D) images 110 of panels included in a cloth. Herein, the panels may be life-size models used to make the cloth, and may represent the shapes of parts of the cloth. For example, the parts of the cloth may be classified into a sleeve, a body, and so on based on the corresponding body parts of a human body. Also, the parts of the cloth may be classified according to the front, rear, left, and right sides thereof.

According to an example embodiment, the 3D cloth data providing apparatus 100 may identify the shapes of the 2D images 110 when acquiring the 2D images 110 of the panels. For example, the 3D cloth data providing apparatus 100 may acquire information about the shapes, lengths, slopes, and positions of lines included in the respective images, and may acquire information about the combination forms of the lines. Also, the 3D cloth data providing apparatus 100 may acquire the coordinate values of at least some of the points of the line of the 2D images 110.

According to an example embodiment, the 3D cloth data providing apparatus 100 may identify the type of the panel corresponding to each of the 2D images 110 by comparing the shapes of the 2D images 110 and pre-stored property information about each panel.

According to an example embodiment, the 3D cloth data providing apparatus 100 may generate 3D data 120 of the cloth by combining the 2D images 110 based on the identified types of the panels. When the types of the panels are determined, the 3D cloth data providing apparatus 100 may generate 3D mesh data from the 2D images of the panels based on one or more of the relationship between the panels, the disposition of the panels, and the texture of the panels. The 3D mesh data may include a set of vertexes and polygons for 3D representation of the surfaces of the cloth.

For example, the 3D cloth data providing apparatus 100 may seam and connect the 2D images 110. Also, the 3D cloth data providing apparatus 100 may dispose the 2D images 110 at proper positions.

According to an example embodiment, the 3D cloth data providing apparatus 100 may apply a texture to the seamed 2D images 110. For example, the 3D cloth data providing apparatus 100 may generate the 3D data 120 of the cloth by applying a texture of red silk cloth to the seamed 2D images 110.

According to an example embodiment, the 3D cloth data providing apparatus 100 may generate the 3D data 120 of the cloth more easily by automatically identifying the panels of the cloth. According to another example embodiment, the 3D cloth data providing apparatus 100 may generate 3D data of a new cloth by combining the images of the panels of each of the present cloths.

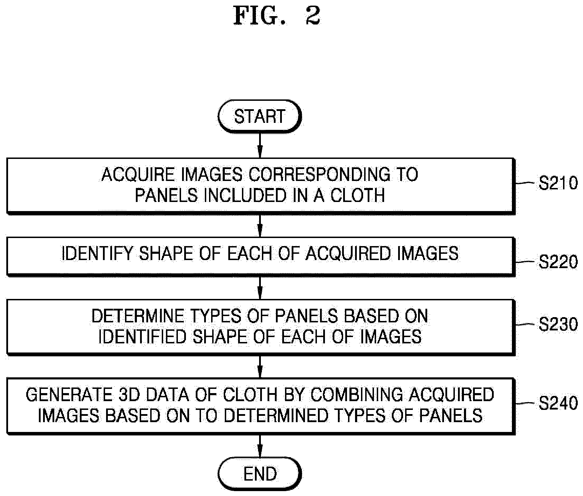

FIG. 2 is a flowchart illustrating an example method for generating 3D data 120 of a cloth by a 3D cloth data providing apparatus 100.

In operation S210, the 3D cloth data providing apparatus 100 acquires images 110 corresponding to panels included in a cloth.

According to an example embodiment, the 3D cloth data providing apparatus 100 may acquire the images 110 corresponding to the panels from an external device. For example, the 3D cloth data providing apparatus 100 may receive the images 110 from an external image forming apparatus. However, this is merely an example; and according to another example embodiment, when including a unit capable of performing the same function as an image forming apparatus, the 3D cloth data providing apparatus 100 may acquire the images 110 by scanning the panels. According to another example embodiment, the 3D cloth data providing apparatus 100 may acquire the images 110 of the panels using a camera and/or the like.

According to an example embodiment, the 3D cloth data providing apparatus 100 may acquire information about the points and the lines included in the panels from the images 110 corresponding to the panels. For example, the 3D cloth data providing apparatus 100 may acquire information about at least one of the shapes, lengths, slopes, and positions of the lines and information about the combination forms of the lines. Also, the 3D cloth data providing apparatus 100 may acquire the coordinate values of the points of the line of the images 110.

In operation S220, the 3D cloth data providing apparatus 100 identifies the shape of each of the acquired images 110.

According to an example embodiment, the 3D cloth data providing apparatus 100 may pre-store the property information of each of the panels necessary to identify the types of the panels. For example, the 3D cloth data providing apparatus 100 may pre-store reference information such as information indicating that the length of a straight line of a shoulder line should be a first threshold value or less and information indicating that the greatest y-coordinate value of a point of a sleeve should be a second threshold value or less. The 3D cloth data providing apparatus 100 may identify the shape of each of the images 110 by extracting information corresponding to a reference, which is necessary to identify the types of the panels, from the information about the acquired images 110.

For example, the 3D cloth data providing apparatus 100 may extract information indicating that among ten acquired images, the first image and the third image correspond to the panels having a straight line with a length of a first threshold value or less and the second image and the fourth image correspond to the panels having a point with the greatest y-coordinate value of a second threshold value or less.

In operation S230, the 3D cloth data providing apparatus 100 determines the types of the panels based on the identified shape of each of the images 110.

According to an example embodiment, the 3D cloth data providing apparatus 100 may identify the type of the panel corresponding to each of the images by comparing the identified shape of each of the images 110 and the pre-stored property information about each panel.

For example, in operation S230, the first image and the third image corresponding to the panels determined as having a straight line with a length of a first threshold value or less may be determined as front and rear body panels. Also, in operation S230, the second image and the fourth image having the greatest y-coordinate value of a second threshold value or less may be determined as left and right sleeve panels.

In operation S240, the 3D cloth data providing apparatus 100 generates 3D data 120 of the cloth by combining the acquired images 110 based on the types of the panels.

According to an example embodiment, the 3D cloth data providing apparatus 100 may seam the images of the panels. For example, the 3D cloth data providing apparatus 100 may seam the first image and the third image to connect the shoulder lines of the first image and the third image determined as the body panels in operation S230.

According to another example embodiment, the 3D cloth data providing apparatus 100 may arrange the images 110 based on the determined types of the panels. For example, the 3D cloth data providing apparatus 100 may arrange the images 110 by identifying the image of the panel to be located at the top thereof and the image of the panel to be located at the bottom thereof among the acquired images 110 of the panels. Also, the 3D cloth data providing apparatus 100 may arrange the images 110 by identifying the image of the panel to be located at the left thereof and the image of the panel to be located at the right thereof among the acquired images 110 of the panels.

The 3D cloth data providing apparatus 100 may use the result of a different operation as a feedback while performing each of the operations of seaming and disposing the images 110. For example, the 3D cloth data providing apparatus 100 may seam some images based on the types of the panels and then seam the unconnected panels based on the disposition/arrangement information of the panels. Herein, the disposition/arrangement information of the panels may be acquired from the 2D cloth images pre-stored in the 3D cloth data providing apparatus 100.

According to an example embodiment, the 3D cloth data providing apparatus 100 may generate the 3D data 120 of the cloth by performing the operations of arranging and seaming the images 110. According to another example embodiment, the 3D cloth data providing apparatus 100 may generate the 3D data 120 of the cloth by applying a texture to the images 110 after performing the operations of arranging and seaming the images 110.

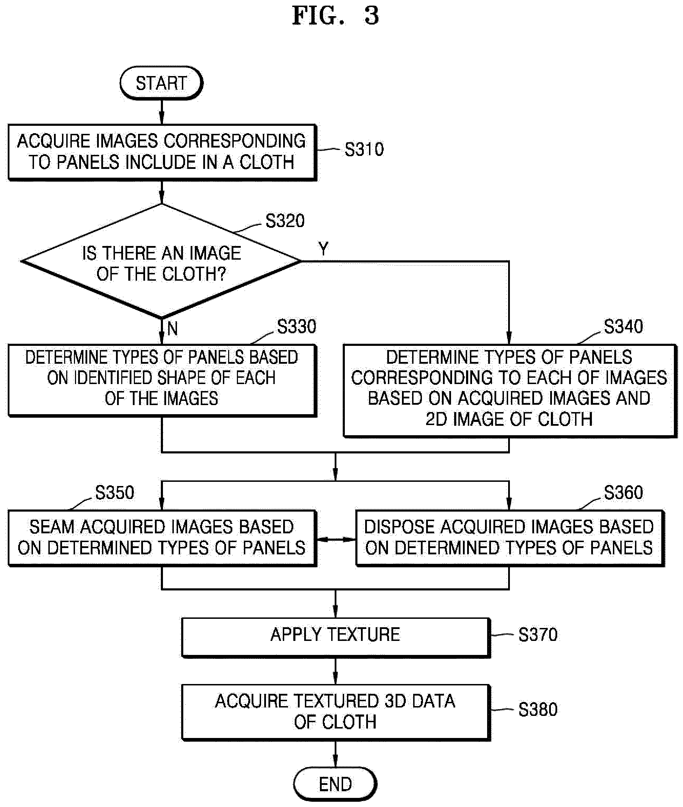

FIG. 3 is a flowchart illustrating an example method for generating 3D data 120 of a cloth by a 3D cloth data providing apparatus 100.

In operation S310, the 3D cloth data providing apparatus 100 acquires images 110 corresponding to panels included in a cloth.

Operation S310 may correspond to operation S210 described above with reference to FIG. 2.

In operation S320, the 3D cloth data providing apparatus 100 may determine whether there is a 2D image of the cloth. Herein, the 2D image of the cloth may represent an image of the complete entire cloth. For example, the image of the cloth may be a 2D image of a shirt, a 2D image of a one-piece, or a 2D image of trousers. In operation S310, the acquired panels may correspond respectively to the parts of the cloth.

In operation S330, when there is no 2D image of the cloth, the 3D cloth data providing apparatus 100 may determine the types of the panels corresponding respectively to the images 110 by identifying the shapes of the acquired images 110.

Operation S330 may correspond to operation S230 described above with reference to FIG. 2.

In operation S340, when there is a 2D image of the cloth, the 3D cloth data providing apparatus 100 may determine the types of the panels corresponding respectively to the images 110 based on the acquired images 110 and the 2D image of the cloth. For example, when the cloth has a high complexity, it may be difficult to determine the types of the panels corresponding respectively to the images 110 based on only the pre-stored property information about the panels. The 3D cloth data providing apparatus 100 may determine the types of the panels corresponding respectively to the images 110 by comparing the images 110 of the panels and the acquired 2D image of the cloth.

In operation S350, the 3D cloth data providing apparatus 100 may seam the images 110 based on the determined types of the panels.

In operation S360, the 3D cloth data providing apparatus 100 may dispose/arrange the images 110 based on the determined types of the panels.

Herein, operation S350 and operation S360 may be simultaneously performed, or operation S360 may be performed before operation S350, etc.

According to an example embodiment, the 3D cloth data providing apparatus 100 may perform each of the operations while feeding back the seaming result and the disposition result to each other.

In operations S370 and S380, the 3D cloth data providing apparatus 100 may generate textured 3D data of the cloth by applying a texture to the seamed image.

According to an example embodiment, the 3D cloth data providing apparatus 100 may acquire texture information of the cloth. Also, the 3D cloth data providing apparatus 100 may apply different texture information to the seamed image based on the types of the panels. For example, the 3D cloth data providing apparatus 100 may apply the texture information of a chiffon material to the sleeve panel and apply the texture information of a silk material to the body panel.

According to an example embodiment, the 3D cloth data providing apparatus 100 may correct the texture information when distorted information is included in the texture information of the cloth. The 3D cloth data providing apparatus 100 may apply the corrected texture information to the 3D data of the cloth.

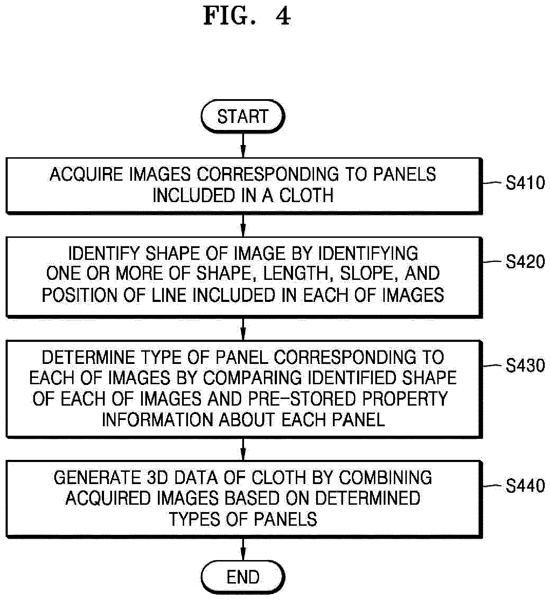

FIG. 4 is a flowchart illustrating an example method for generating 3D data 120 of a cloth by identifying the shapes of 2D images 110 of panels by a 3D cloth data providing apparatus 100.

In operation S410, the 3D cloth data providing apparatus 100 may acquire images 110 corresponding to panels included in a cloth.

Operation S410 may correspond to operation S210 described above with reference to FIG. 2.

In operation S420, the 3D cloth data providing apparatus 100 may identify the shape of the image by identifying one or more of the shape, length, slope, and position of the line included in each of the images 110.

According to an example embodiment, the 3D cloth data providing apparatus 100 may pre-store reference information necessary to identify the types of the panels. For example, the reference information may include information about the number of straight lines having a certain length or less and information about whether the line corresponding to a straight line among the lines has a slope of certain degrees or less. However, this is merely an example, and the reference information is not limited thereto.

For example, the 3D cloth data providing apparatus 100 may identify the curvature of the line constituting each of the images 110. Also, the 3D cloth data providing apparatus 100 may identify the slope value of the line having a certain length or less among the lines included in each of the images 110.

According to an example embodiment, the 3D cloth data providing apparatus 100 may identify the maximum and minimum coordinate values among the points of the line. Also, the 3D cloth data providing apparatus 100 may select the point having the greatest y-coordinate value in the image and identify the slope variation of the lines connected to the left and right of the selected point. According to another example embodiment, the 3D cloth data providing apparatus 100 may identify information about the lengths of curved lines connected to both sides with respect to the center point thereof.

In operation S430, the 3D cloth data providing apparatus 100 may identify the type of the panel corresponding to each of the images 110 by comparing the identified shape of each of the images and the pre-stored property information about each panel.

According to an example embodiment, when the first line included in the first image has a curvature of a certain value or less and a slope of certain degrees or less, the 3D cloth data providing apparatus 100 may determine, for example, the first line as a candidate shoulder line. Also, when one of two lines connected to both sides of the shoulder line has a curvature of a certain value or more, the 3D cloth data providing apparatus 100 may, for example, identify the first image as an image of the body panel including the shoulder and neck lines.

When there are two images of the body panel detected based on the above method, the 3D cloth data providing apparatus 100 may, for example, determine whether the body panel is the front body panel or the rear body panel, by comparing the lengths of curved lines having a curvature of a certain value or more.

According to another example embodiment, the 3D cloth data providing apparatus 100 may determine whether the second image corresponds to the sleeve panel, based on, for example, the slope variation of the lines connected to both sides with respect to the point having the greatest y-coordinate value in the second image. Also, by comparing the lengths of two curved lines connected to both sides with respect to the center point thereof, the 3D cloth data providing apparatus 100 may determine whether the second image corresponds to the left sleeve panel or the right sleeve panel.

In operation S440, the 3D cloth data providing apparatus 100 may generate 3D data of the cloth by combining the acquired images based on the determined types of the panels.

Operation S440 may correspond to operation S240 described above with reference to FIG. 2.

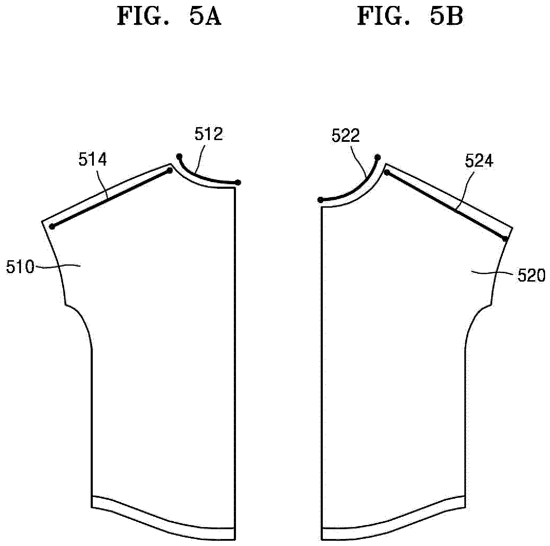

FIGS. 5A and 5B are diagrams illustrating an example method for identifying a body panel by a 3D cloth data providing apparatus 100.

Referring to FIG. 5A, in a (5A)th image 510, the 3D cloth data providing apparatus 100 may determine a curved line having a curvature of a first threshold value or more as a neck line 512. Also, in the (5A)th image 510, the 3D cloth data providing apparatus 100 may determine a line having a curvature of a second threshold value or less and a slope of a first threshold angle or less as a shoulder line 514.

According to an example embodiment, when the neck line 512 and the shoulder line 514 are identified in the (5A)th image 510, the 3D cloth data providing apparatus 100 may identify the (5A)th image 510 as the body panel including the neck line 512 and the shoulder line 514. Also, when the (5A)th image 510 has a shorter neck line than another image (e.g., 520) recognized as the body panel among the acquired images 110, the 3D cloth data providing apparatus 100 may determine the (5A)th image 510 as the rear body panel.

Referring to FIG. 5B, in a (5B)th image 520, the 3D cloth data providing apparatus 100 may determine a curved line having a curvature of a first threshold value or more as a neck line 522. Also, in the (5B)th image 520, the 3D cloth data providing apparatus 100 may determine a line having a curvature of a second threshold value or less and a slope of a first threshold angle or less as a shoulder line 524.

According to an example embodiment, when the neck line 522 and the shoulder line 524 are identified in the (5B)th image 520, the 3D cloth data providing apparatus 100 may identify the (5B)th image 520 as the body panel including the neck line 522 and the shoulder line 524. Also, when the (5B)th image 520 has a longer neck line than another image (e.g., 510) recognized as the body panel among the acquired images 110, the 3D cloth data providing apparatus 100 may determine the (5B)th image 520 as the front body panel.

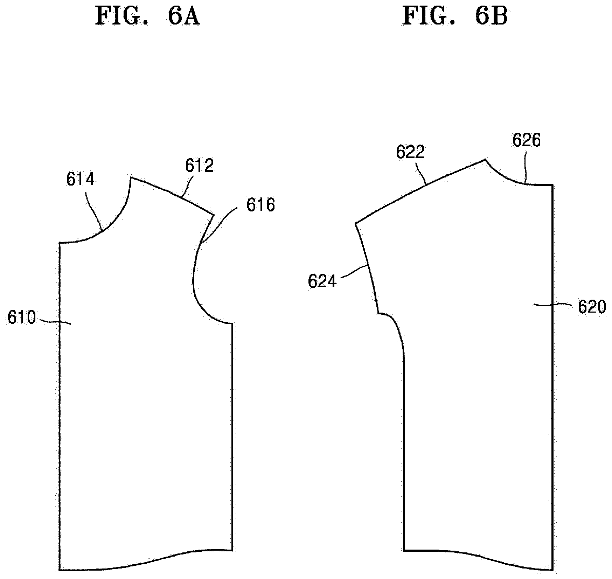

FIGS. 6A and 6B are diagrams illustrating another example method for identifying a body panel by a 3D cloth data providing apparatus 100.

Referring to FIG. 6A, the 3D cloth data providing apparatus 100 may detect straight lines having a first threshold length or less among the lines of a (6A)th image 610. Among the detected straight lines, the 3D cloth data providing apparatus 100 may select a straight line 612 having a greater y-coordinate value than the center point of the (6A)th image 610. Also, the 3D cloth data providing apparatus 100 may determine whether the selected straight line 612 has a slope of a certain value or less. When the selected straight line 612 has a slope of a certain value or less, the 3D cloth data providing apparatus 100 may determine whether other lines 614 and 616 connected to both sides of the selected straight line 612 have a second threshold length or less.

The 3D cloth data providing apparatus 100 may determine the selected straight line as the shoulder line 612. The 3D cloth data providing apparatus 100 may determine whether both lines 614 and 616 connected to the shoulder line 612 are curved lines. When both lines 614 and 616 connected to the shoulder line 612 are curved lines, the 3D cloth data providing apparatus 100 may determine the first body panel among the body panels as the panel corresponding to the (6A)th image 610.

Referring to FIG. 6B, the 3D cloth data providing apparatus 100 may detect straight lines 622 and 624 having a first threshold length or less among the lines of a (6B)th image 620. Among the detected straight lines 622 and 624, the 3D cloth data providing apparatus 100 may select straight lines 622 and 624 having a greater y-coordinate value than the center point of the (6B)th image 620. Also, among the selected straight lines 622 and 624, among the straight lines 622 and 624 having a slope of a certain value or less, the 3D cloth data providing apparatus 100 may finally select the straight line 622 having other lines with a second threshold length or less connected to both sides thereof.

The 3D cloth data providing apparatus 100 may determine the selected straight line as the shoulder line 622. The 3D cloth data providing apparatus 100 may determine whether both lines 624 and 626 connected to the shoulder line 622 are curved lines. When one line 626 among both lines 624 and 626 connected to the shoulder line 622 is a curved line, the 3D cloth data providing apparatus 100 may determine the second body panel among the body panels as the panel corresponding to the (6B)th image 620.

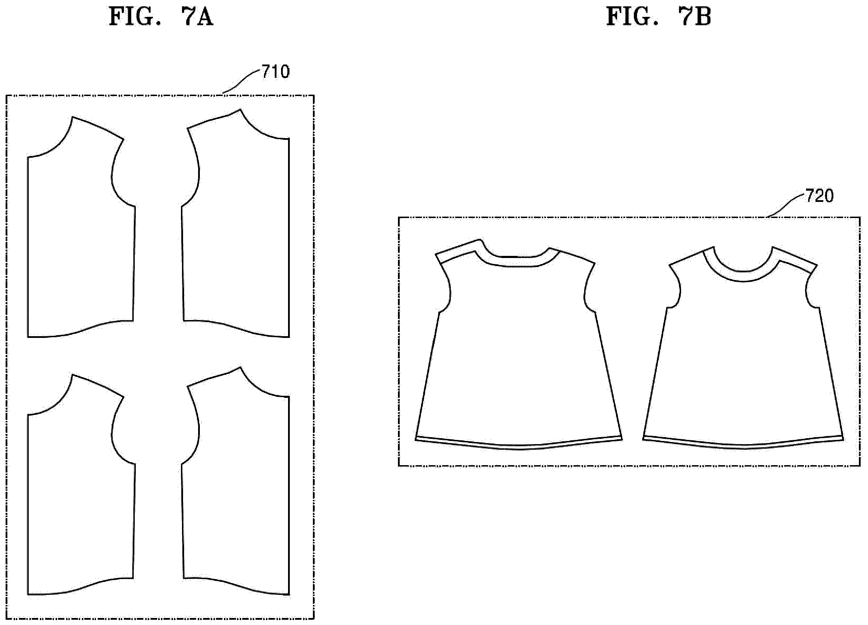

FIGS. 7A and 7B are diagrams illustrating another example method for identifying a body panel by a 3D cloth data providing apparatus 100.

Referring to FIG. 7A, as a result of identifying images 710 acquired by the 3D cloth data providing apparatus 100, there may be four panels determined as the first body panel. Since there are four panels of the same shape, the 3D cloth data providing apparatus 100 may determine that the front/rear and left/right of the cloth are the same.

Referring to FIG. 7B, as a result of identifying images 720 acquired by the 3D cloth data providing apparatus 100, there may be two body panels having different neck lines. Since there are two body panels having different neck lines, the 3D cloth data providing apparatus 100 may determine that the front and rear body panels of the cloth are asymmetrical.

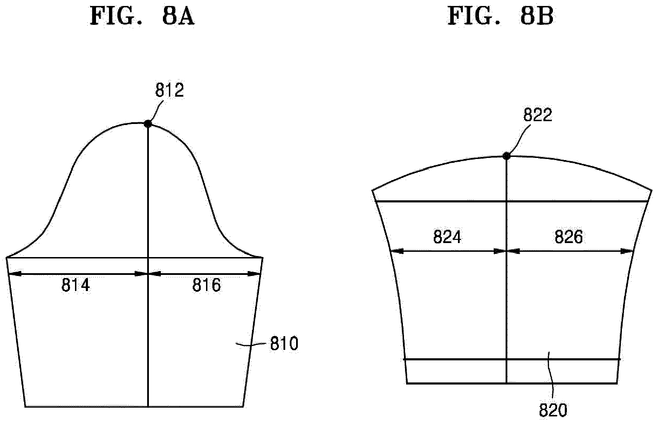

FIGS. 8A and 8B are diagrams illustrating an example method for identifying a sleeve panel by a 3D cloth data providing apparatus 100.

Referring to FIG. 8A, the 3D cloth data providing apparatus 100 may select a point 812 having the greatest y-coordinate value among the points of an (8A)th image 810. The 3D cloth data providing apparatus 100 may determine whether other points adjacent to the selected point 812 have a slope change of a certain value or less. As a result of the determination, when the slope change is of a threshold value or less, the 3D cloth data providing apparatus 100 may determine the (8A)th image 810 as the sleeve panel.

Also, when a right line 816 of the (8A)th image 810 is shorter than a left line 814 thereof, the 3D cloth data providing apparatus 100 may determine the (8A)th image 810 as the right sleeve panel. However, this is merely an example, and a method for determining the left/right of the sleeve by the 3D cloth data providing apparatus 100 is not limited thereto.

Referring to FIG. 8B, the 3D cloth data providing apparatus 100 may select a point 822 having the greatest y-coordinate value among the points of an (8B)th image 820. The 3D cloth data providing apparatus 100 may determine whether other points adjacent to the selected point 822 have a slope change of a certain value or less. As a result of the determination, when the slope change is of a threshold value or less, the 3D cloth data providing apparatus 100 may determine the (8B)th image 820 as the sleeve panel.

Also, when a left line 824 of the (8B)th image 820 is shorter than a right line 826 thereof, the 3D cloth data providing apparatus 100 may determine the (8B)th image 820 as the left sleeve panel.

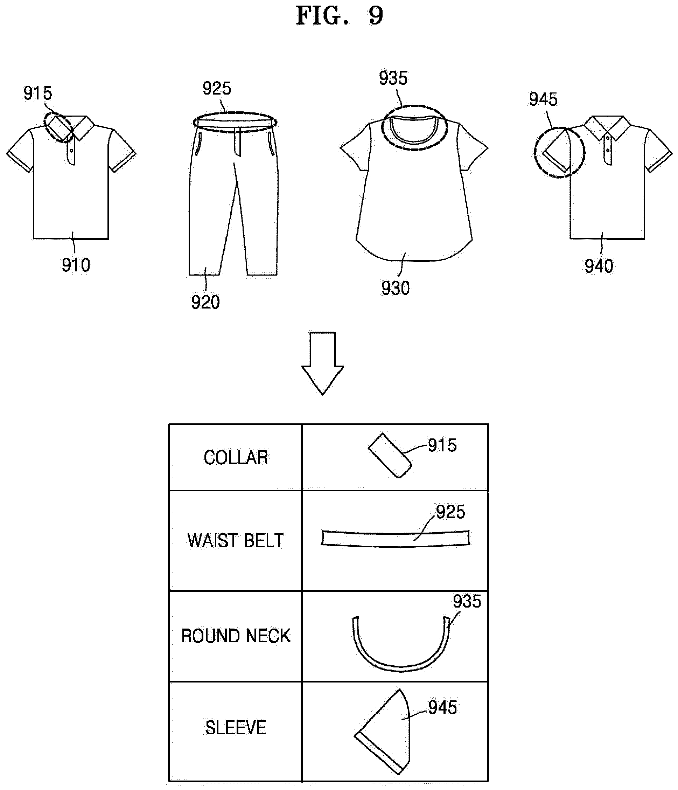

FIG. 9 is a diagram illustrating an example method for forming a database about each of panels from 2D images 910, 920, 930, and 940 of at least one cloth by a 3D cloth data providing apparatus 100 according to an exemplary embodiment.

According to an exemplary embodiment, the 3D cloth data providing apparatus 100 may acquire 2D images 910, 920, 930, and 940 of at least one cloth. For example, the 3D cloth data providing apparatus 100 may acquire 2D images of collared T-shirts, trousers, round T-shirts, and skirts.

According to an example embodiment, the 3D cloth data providing apparatus 100 may classify the images of the panels of each cloth based on the user inputs about the acquired 2D images 910, 920, 930, and 940.

For example, the 3D cloth data providing apparatus 100 may extract an image of a collar 915 from a first cloth 910. Also, the 3D cloth data providing apparatus 100 may extract an image of a belt 925 from a second cloth 920. Also, the 3D cloth data providing apparatus 100 may extract an image of a round neck 935 from a third cloth 930. Also, the 3D cloth data providing apparatus 100 may extract an image of a sleeve 945 from a fourth cloth 940.

According to an example embodiment, the 3D cloth data providing apparatus 100 may store the extracted images 915, 925, 935, and 945. When the images 110 of the panels of the cloth are acquired later, the 3D cloth data providing apparatus 100 may identify the types of the panels corresponding respectively to the acquired images 110 by comparing information about the stored images 915, 925, 935, and 945 and the acquired images 110. For example, by comparing the stored images 915, 925, 935, and 945 and the acquired images 110, the 3D cloth data providing apparatus 100 may determine the panel corresponding to the image of the collar 915 as the sleeve panel.

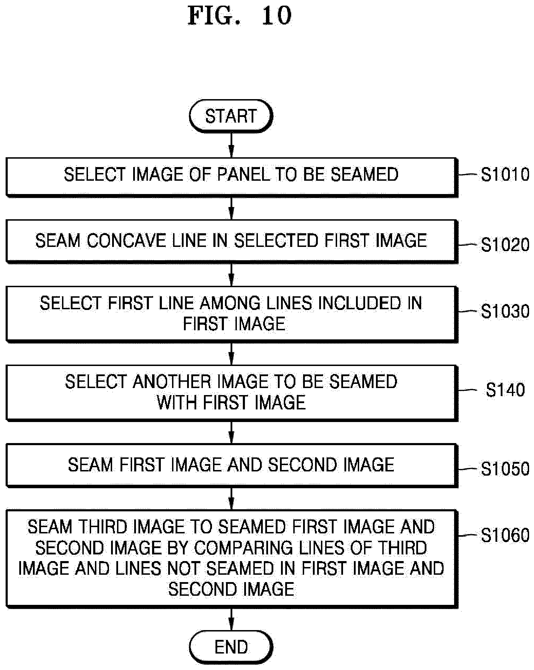

FIG. 10 is a flowchart illustrating an example method for seaming images 110 by a 3D cloth data providing apparatus 100.

According to an example embodiment, a rule used to seam the images 110 may be pre-stored in the 3D cloth data providing apparatus 100. For example, the 3D cloth data providing apparatus 100 may seam the images 110 such that at least one line of each image is connected to a line of another image. Also, the 3D cloth data providing apparatus 100 may seam the images of bisymmetrical panels in the same manner. According to another example embodiment, the 3D cloth data providing apparatus 100 may not seam the lines having no connection relationship therebetween. According to another example embodiment, the 3D cloth data providing apparatus 100 may set the seam line length to be the same, except for a particular case such as shirring.

When the types of the panels corresponding to the images 110 are identified, the 3D cloth data providing apparatus 100 may seam the images with the determined connection relationship therebetween and seam the panels with no determined connection relationship therebetween with reference to the disposition positions of the panels. For example, there may be a higher probability of seaming between the panels disposed to be closer to each other. Also, herein, examples of the panels with the connection relationship determined therebetween by the identification of the types of the panels corresponding to the images 110 may include the front body panel / the rear body panel, the body panel / the sleeve panel, and the collar panel / the body panel. However, this is merely an example, and the disclosure is not limited thereto.

In operation S1010, the 3D cloth data providing apparatus 100 may select an image of the panel to be seamed. For example, the 3D cloth data providing apparatus 100 may select the right body panel. However, this is merely an example, and the order of seaming the images 110 by the 3D cloth data providing apparatus 100 may vary based on the settings thereof.

In operation S1020, the 3D cloth data providing apparatus 100 may seam a concave line in the selected first image. According to an example embodiment, the 3D cloth data providing apparatus 100 may first seam a concave line in the first image before seaming the first image to another image.

In operation S1030, the 3D cloth data providing apparatus 100 may select a first line among the lines included in the first image. For example, the 3D cloth data providing apparatus 100 may select a shoulder line of the first image as the first line of seaming. The 3D cloth data providing apparatus 100 may perform the seaming sequentially from the selected first line.

In operation S1040, the 3D cloth data providing apparatus 100 may select another image to be seamed with the first image. For example, the 3D cloth data providing apparatus 100 may select the second image corresponding to the right sleeve panel that may be connected with the first image corresponding to the right body panel.

In operation S1050, the 3D cloth data providing apparatus 100 may seam the first image and the second image together.

According to an example embodiment, the 3D cloth data providing apparatus 100 may perform the seaming between the first image and the second image, starting from the first line. Herein, the 3D cloth data providing apparatus 100 may perform the seaming between the first image and the second image based on the pre-stored rule described above.

In operation S1060, when there is the remaining third image, the 3D cloth data providing apparatus 100 may seam the third image to the seamed first image and second image by comparing the lines of the third image and the lines not seamed in the first image and the second image.

According to another example embodiment, the 3D cloth data providing apparatus 100 may acquire the disposition/arrangement information of the first image, the second image, and the third image and seam the third image to the first image and the second image based on the acquired disposition information. Herein, the disposition information may be acquired from the 2D image of the cloth including the patterns corresponding respectively to the first image, the second image, and the third image. According to an example embodiment, the 3D cloth data providing apparatus 100 may seam the images more accurately using the disposition information of the images of the cloth.

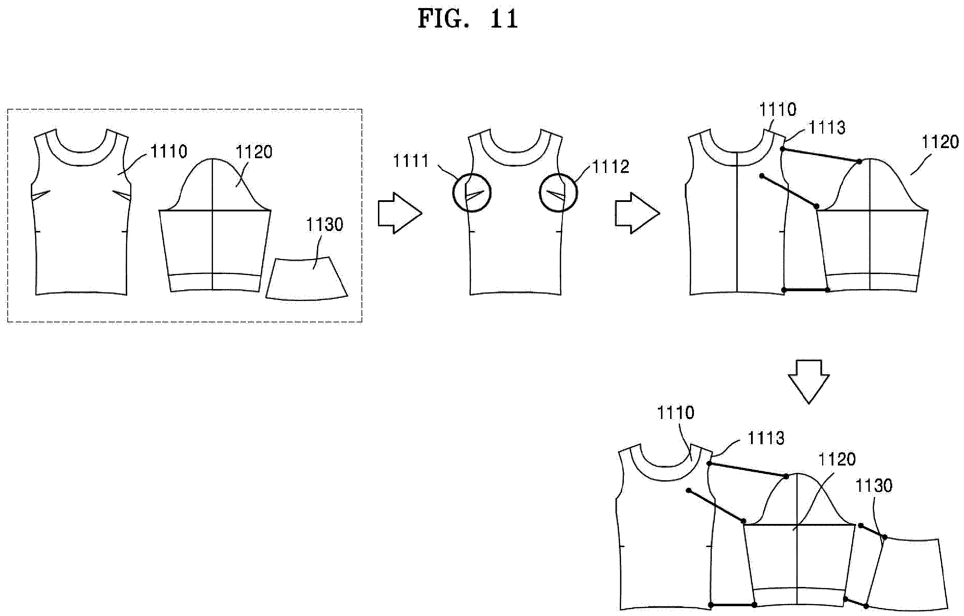

FIG. 11 is a diagram illustrating an example method for seaming images 110 by a 3D cloth data providing apparatus 100.

According to an example embodiment, the 3D cloth data providing apparatus 100 may select a body panel image 1110 among the acquired panel images 1110, 1120, and 1130. The 3D cloth data providing apparatus 100 may seam concave lines 1111 and 1112 in the selected body panel image 1110. For example, the 3D cloth data providing apparatus 100 may first seam the concave lines 1111 and 1112 in the body panel image 1110 before seaming the body panel image 1110 to another image.

The 3D cloth data providing apparatus 100 may select a shoulder line 1113 among the lines 1111, 1112, and 1113 of the body panel image 1110. The 3D cloth data providing apparatus 100 may perform the seaming sequentially from the selected shoulder line 1113.

According to an example embodiment, the 3D cloth data providing apparatus 100 may select the body panel image 1110 and the sleeve panel image 1120 based on the shoulder line 1113.

According to an example embodiment, the 3D cloth data providing apparatus 100 may seam the body panel image 1110 and the right sleeve panel image 1120, starting from the shoulder line 1113. Herein, the 3D cloth data providing apparatus 100 may seam the right body panel image 1110 and the right sleeve panel image 1120 based on the rule described above with reference to FIG. 10.

According to an example embodiment, when there is the remaining image 1130, the 3D cloth data providing apparatus 100 may seam the remaining image 1130 by comparing the lines of the remaining image 1130 and the lines not seamed in the body panel image 1110 and the right sleeve panel image 1120.

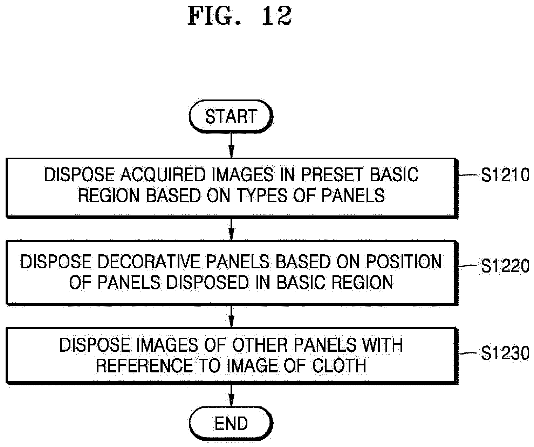

FIG. 12 is a flowchart illustrating an example method for disposing/arranging images 110 by a 3D cloth data providing apparatus 100.

In operation S1210, the 3D cloth data providing apparatus 100 may dispose the acquired images in, for example, ten preset basic regions based on the types of the panels. Herein, the ten preset basic regions may include, for example, eight left/right, top/bottom, and front/rear side regions and two left/right sleeve regions.

In operation S1220, the 3D cloth data providing apparatus 100 may dispose decorative panels based on the positions of the panels disposed in the basic region. Herein, the decorative panels may include, for example, images of collars and belts, or the like.

In operation S1230, the 3D cloth data providing apparatus 100 may dispose the images of the panels with reference to the 2D image of the cloth. For example, from the 2D image of the cloth, the 3D cloth data providing apparatus 100 may determine that a pocket is attached to the top left of a shirt. When a pocket is attached to the top left of a shirt, the 3D cloth data providing apparatus 100 may dispose the image corresponding to the pocket panel in the top left region among the preset basic regions.

According to another example embodiment, the 3D cloth data providing apparatus 100 may dispose the images 110 (see, e.g., FIG. 1) based on the information about the panels with the connection relationship determined therebetween in the process of seaming the images 110. For example, since the body panel and the sleeve panel have a connection relationship therebetween, the 3D cloth data providing apparatus 100 may dispose the body panel and the sleeve panel to be close to each other.

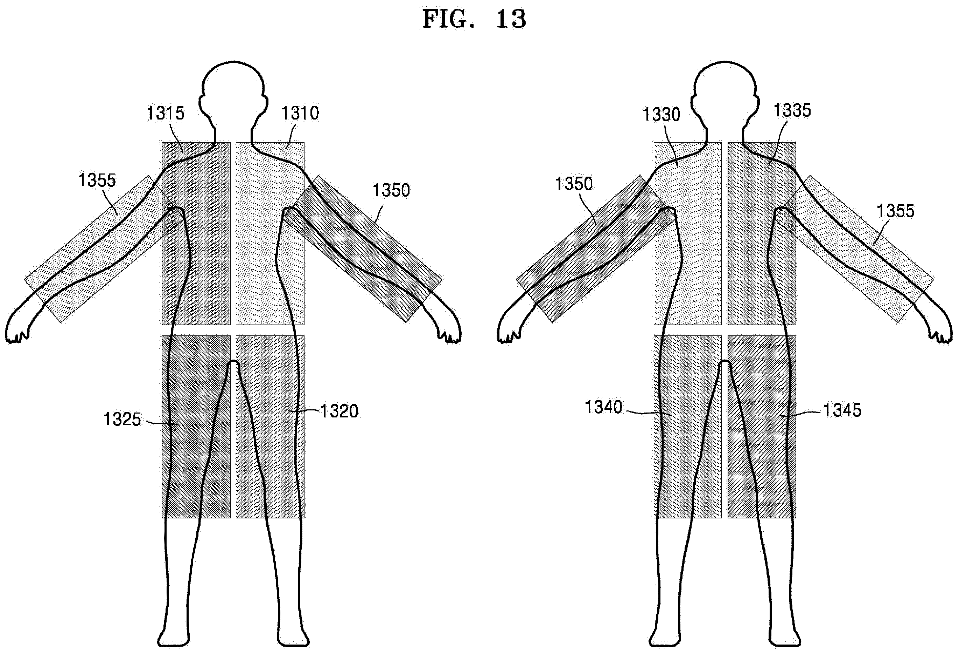

FIG. 13 is a diagram illustrating basic regions 1310, 1315, 1320, 1325, 1330, 1335, 1340, 1345, 1350, and 1355 in which images 110 are disposed by a 3D cloth data providing apparatus 100.

Referring to FIG. 13, images corresponding to a left top front 1310, a right top front 1315, a left bottom front 1320, a right bottom front 1325, a left top rear 1330, a right top rear 1335, a left bottom rear 1340, a right bottom rear 1345, a left sleeve 1350, and a right sleeve 1355 may be disposed respectively in the basic regions where the images 110 are disposed.

According to an example embodiment, the 3D cloth data providing apparatus 100 may determine the positions of other images based on the relationship between the images disposed in the basic regions and the other images not disposed in the basic regions. Herein, the other images may include, for example, the images of decorative panels.

According to another example embodiment, the 3D cloth data providing apparatus 100 may determine the positions of other images with reference to the 2D image of the cloth.

According to another example embodiment, the 3D cloth data providing apparatus 100 may dispose the images of different panels with the determined seaming relationship therebetween to be close to each other. For example, the 3D cloth data providing apparatus 110 may dispose the right sleeve panel and the right body panel at the positions adjacent to each other.

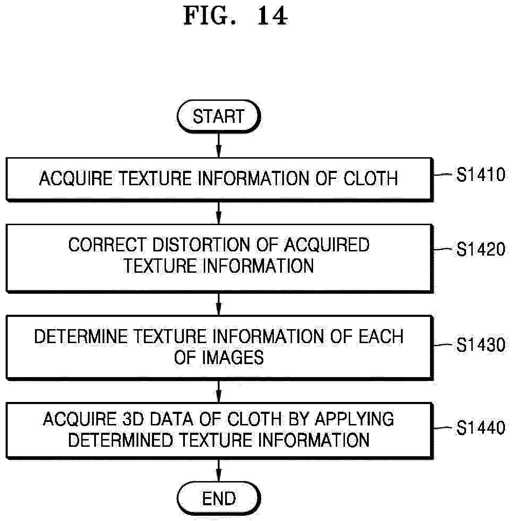

FIG. 14 is a flowchart illustrating an example method for generating 3D data of a cloth using texture information of images 110 by a 3D cloth data providing apparatus 100.

In operation S1410, the 3D cloth data providing apparatus 100 may acquire texture information of the cloth.

According to an example embodiment, the 3D cloth data providing apparatus 100 may acquire texture information of the images 110 together while acquiring the images 110 of the panels of the cloth. According to another example embodiment, the 3D cloth data providing apparatus 100 may acquire texture information of each of the images 110 of the panels from the 2D image information of the entire cloth.

For example, the 3D cloth data providing apparatus 100 may acquire the texture information indicating that the top front body includes silk fabrics and the left sleeve and the right sleeve include chiffon fabrics.

In operations S1420 and S1430, the 3D cloth data providing apparatus 100 may determine the texture information of each of the images 110 based on the acquired texture information and correct distortion of the acquired texture information.

According to an example embodiment, the 3D cloth data providing apparatus 100 may determine the type of the panel corresponding to each of the images 110. A method for determining the type of the panel corresponding to each of the images 110 by the 3D cloth data providing apparatus 100 may be the same as or similar to that described above with reference to FIGS. 4 to 9.

Based on the texture information indicating that the left sleeve and the right sleeve include chiffon fabrics, the 3D cloth data providing apparatus 100 may determine the texture of the images, which are determined respectively as the left sleeve panel and the right sleeve panel, as chiffon. Also, based on the texture information indicating that the top front body includes silk fabrics, the 3D cloth data providing apparatus 100 may determine the texture of the image, which is determined as the top front body, as silk.

In operation S1440, the 3D cloth data providing apparatus 110 may acquire the 3D data of the cloth by applying the determined texture information to the seamed images.

According to an example embodiment, the 3D cloth data providing apparatus 110 may apply the texture information to the seamed images after seaming the images 110.

According to another example embodiment, before applying the texture information to the images, the 3D cloth data providing apparatus 100 may determine whether the texture information is distorted. For example, at least some of the texture information may be distorted by shadow and/or illumination at the time of photographing the cloth. When determining that the texture information is distorted, the 3D cloth data providing apparatus 100 may correct the texture information S1420.

The 3D cloth data providing apparatus 100 may apply the corrected texture information to the completely-seamed images.

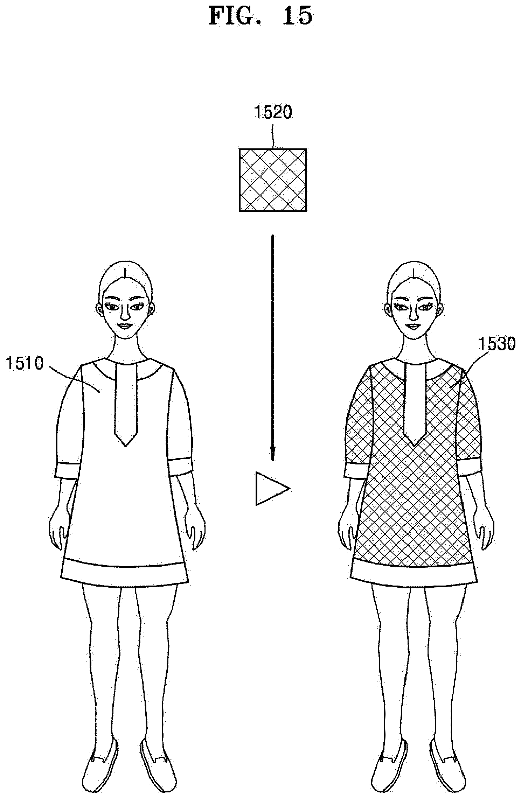

FIG. 15 is a diagram illustrating an example method for generating 3D data 1510 of a cloth by using texture information by a 3D cloth data providing apparatus 100.

According to an example embodiment, the 3D cloth data providing apparatus 100 may acquire the images of the panels of the cloth. The 3D cloth data providing apparatus 100 may identify the shapes of the acquired images and seam the identified images to generate 3D data 1510 of the cloth.

Also, according to an example embodiment, the 3D cloth data providing apparatus 100 may acquire texture information 1520 about the cloth. Herein, the texture information 1520 may be provided as a close-up image of the fabric of the cloth. According to another example embodiment, the texture information 1520 may be provided through, for example, an identification code representing the particular texture information 1520.

For example, the 3D cloth data providing apparatus 100 may acquire the texture information 1520 representing a check-patterned silk fabric. The 3D cloth data providing apparatus 100 may generate textured 3D data 1530 by applying a texture to the 3D data 1510 generated by seaming the identified images.

Also, in addition to the texture information 1520 about the cloth, the 3D cloth data providing apparatus 100 may apply various types of texture information to the generated 3D data 1510, as illustrated in 1530.

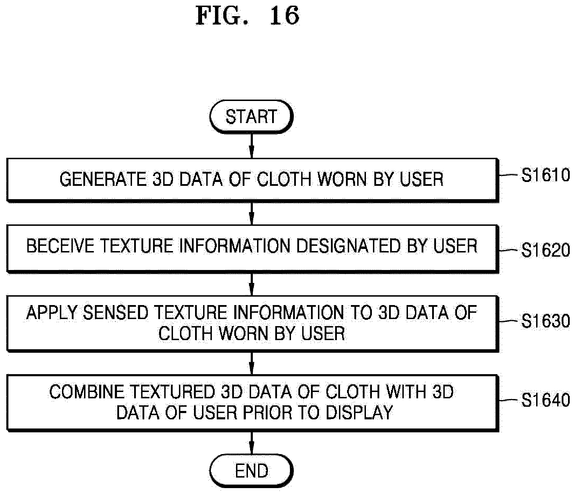

FIG. 16 is a flowchart illustrating an example method for generating 3D data of a cloth using shape information of the cloth worn by the user and texture information received from the user by a 3D cloth data providing apparatus 100.

In operation S1610, the 3D cloth data providing apparatus 100 may acquire 3D data of the cloth worn by the user. For example, the 3D cloth data providing apparatus 100 may acquire a captured image of the user wearing the cloth from an RGB camera and a depth camera that may acquire depth information. The 3D cloth data providing apparatus 100 may identify the shape of the cloth from the acquired image.

The depth camera and the RGB camera may be provided in the 3D cloth data providing apparatus 100, or may be separate devices from the 3D cloth data providing apparatus 100.

In operation S1620, the 3D cloth data providing apparatus 100 may receive texture information from the user. For example, the 3D cloth data providing apparatus 100 may acquire texture information of another cloth held by the user. Herein, the user may provide the texture information of the other cloth to the 3D cloth data providing apparatus 100 by approaching the other cloth to a particular region on a user interface provided by a display unit of the 3D cloth data providing apparatus 100.

In operation S1630, the 3D cloth data providing apparatus 100 may generate 3D data of another cloth by applying the texture information received from the user to the 3D data of the cloth worn by the user.

For example, the 3D cloth data providing apparatus 100 may generate 3D data of a red sleeveless dress by applying a red texture received from the user to a white sleeveless dress worn by the user. Herein, the properties other than the texture of the red sleeveless dress are the same as those of the white sleeveless dress.

In operation S1640, the 3D cloth data providing apparatus 100 may combine the generated 3D data of the other cloth and the 3D data of the user and display the combination result thereof.

For example, the 3D cloth data providing apparatus 100 may combine the 3D data of the red sleeveless dress and the 3D data of the user so that the user may appear to wear the newly-generated red sleeveless dress.

Also, according to an example embodiment, the 3D cloth data providing apparatus 100 may also control and change the 3D data of the cloth based on the motion of the user by acquiring the motion information of the user in real time from the depth camera photographing the user.

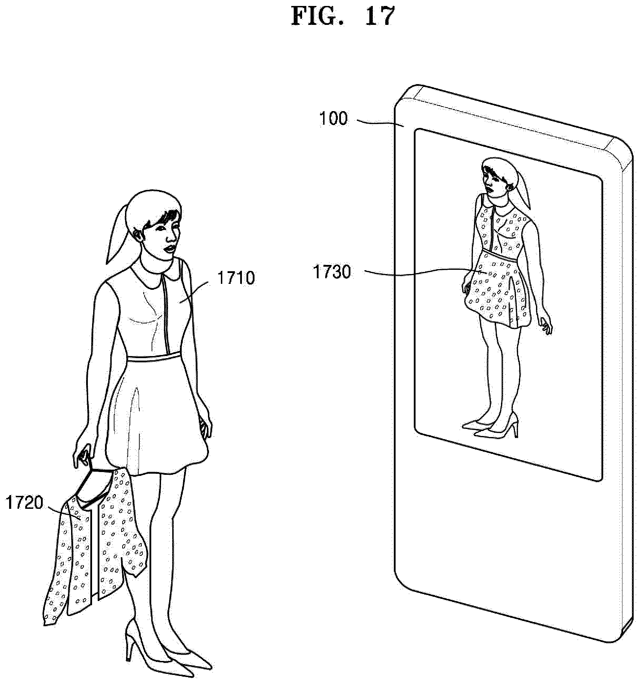

FIG. 17 is a diagram illustrating an example method for generating 3D data of a cloth using shape information of the cloth worn by the user and texture information received from the user by a 3D cloth data providing apparatus 100.

Referring to FIG. 17, by using the depth camera, the 3D cloth data providing apparatus 100 may acquire information about an image of the user wearing a cloth 1710. The 3D cloth data providing apparatus 100 may identify an image of the cloth 1710 from the acquired information.

According to an example embodiment, the 3D cloth data providing apparatus 100 may receive information about a texture different from the texture of the currently-worn cloth 1710 from the user. For example, referring to FIG. 17, the user may provide the 3D cloth data providing apparatus 100 with information about a dot-patterned fabric 1720 having a texture different from the texture of a white sleeveless dress 1710 worn by the user.

The 3D cloth data providing apparatus 100 may apply the received dot-patterned texture to the 3D data of the white sleeveless dress 1710 worn by the user. The 3D cloth data providing apparatus 100 may generate 3D data 1730 of a sleeveless dress textured with a dot pattern.

Also, the 3D cloth data providing apparatus 100 may combine the 3D data of the user and the 3D data 1730 of the sleeveless dress textured with the dot pattern and display the combination result thereof.

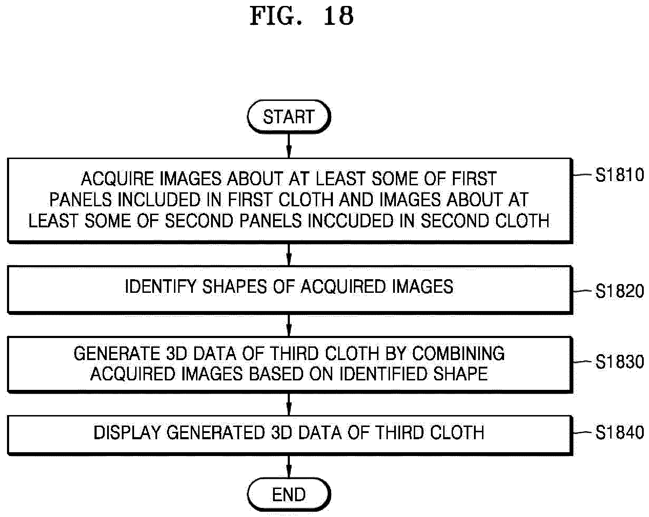

FIG. 18 is a flowchart illustrating an example method for generating 3D data of a third cloth by using images of panels about a first cloth and images of panels about a second cloth by a 3D cloth data providing apparatus 100.

In operation S1810, the 3D cloth data providing apparatus 100 may acquire images about at least some of the first panels included in the first cloth and images about at least some of the second panels included in the second cloth.

For example, the 3D cloth data providing apparatus 100 may acquire images of the first panels included the first cloth that is a blouse. Also, the 3D cloth data providing apparatus 100 may acquire images of the panels below a waist line among the second panels included in the second cloth that is a one-piece.

According to an example embodiment, the 3D cloth data providing apparatus 100 may acquire at least some of the panels included in each of the first cloth and the second cloth through the camera thereof. For example, when only the panels below the waist line among the second panels included in the second cloth are sensed by the camera of the 3D cloth data providing apparatus 100, the 3D cloth data providing apparatus 100 may acquire the images of the panels below the waist line.

However, this is merely an example, and the 3D cloth data providing apparatus 100 may not include the camera. For example, the 3D cloth data providing apparatus 100 may acquire the images of the panels included in the cloth from an external image forming apparatus or an external camera.

According to another example embodiment, the 3D cloth data providing apparatus 100 may display the images of the first panels included the first cloth and the images of the second panels included in the second cloth.

The 3D cloth data providing apparatus 100 may select at least some of the displayed images of the first panels and the displayed images of the second panels based on the user's selection input. For example, the 3D cloth data providing apparatus 100 may select the images of all the first panels when receiving a drag input for selecting all the first panels from the user. The 3D cloth data providing apparatus 100 may perform the following operations S1820 to S1840 on the images selected by the user.

In operation S1820, the 3D cloth data providing apparatus 100 may identify the shapes of the acquired images.

According to an example embodiment, the 3D cloth data providing apparatus 100 may acquire information about the length, size, position, and slope of the line of each of the acquired images. Also, the 3D cloth data providing apparatus 100 may acquire the coordinate values of the points of the line of each the acquired images.

A method for identifying the shapes of the acquired images in operation S1820 may correspond to the method for identifying the shapes of the images described above with reference to FIGS. 4 to 9.

In operation S1830, the 3D cloth data providing apparatus 100 may generate 3D data of the third cloth by combining the acquired images based on the identified shapes.

According to an example embodiment, the 3D cloth data providing apparatus 100 may combine the acquired images of the first panels and the acquired images of the second panels based on the identified shapes. For example, when the acquired images of the first panels correspond to the panels included in the top of the first cloth and the acquired images of the second panels correspond to the panels included in the bottom of the second cloth, the 3D cloth data providing apparatus 100 may generate the 3D data of the third cloth by disposing and seaming the images of the first panels at the top thereof and the images of the second panels at the bottom thereof.

In operation S1840, the 3D cloth data providing apparatus 100 may display the generated 3D data of the third cloth.

According to an example embodiment, the 3D cloth data providing apparatus 100 may display the 3D data of the third cloth on the display of the display unit. Also, the 3D cloth data providing apparatus 100 may combine the 3D data of the third cloth and the 3D data of the user and display the combination result thereof.

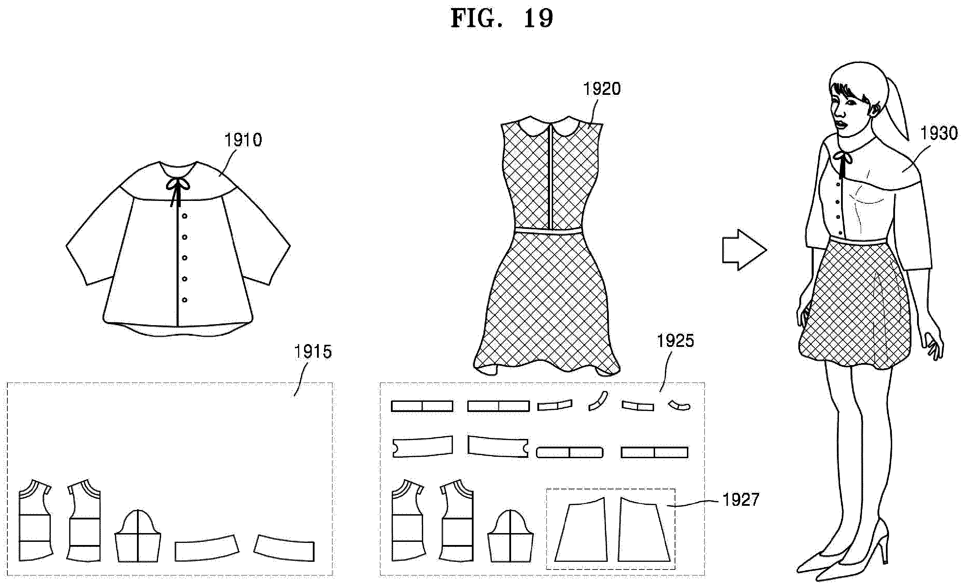

FIG. 19 is a diagram illustrating an example method for generating 3D data 1930 of a third cloth using images 1915 of panels of a first cloth 1910 and images 1925 of panels of a second cloth 1920 by a 3D cloth data providing apparatus 100.

According to an example embodiment, the 3D cloth data providing apparatus 100 may acquire the images 1915 of the first panels of the blouse 1910. Also, the 3D cloth data providing apparatus 100 may acquire the images 1925 of some of the second panels of the sleeveless one-piece 1920.

For example, when the user overlaps the blouse 1910 with the top portion of the sleeveless one-piece 1920 for recognition by the camera, the 3D cloth data providing apparatus 100 may acquire the images 1915 of the first panels and some images 1927 among the images 1925 of the second panels.

However, this is merely an example, and a method for acquiring the images of the panels for each of the cloths by the 3D cloth data providing apparatus 100 is not limited thereto. According to another example embodiment, the 3D cloth data providing apparatus 100 may directly receive an input for selecting some of the panels for each of the cloths from the user.

According to an example embodiment, the 3D cloth data providing apparatus 100 may identify the shapes of the acquired images 1915 and 1927. The 3D cloth data providing apparatus 100 may identify the shape of each of the acquired images by identifying at least one of the length, shape, position, and slope of the line of each of the acquired images 1915 and 1927. The 3D cloth data providing apparatus 100 may determine the type of the panel corresponding to each of the acquired images 1915 and 1927 based on the identify shape.

For example, the 3D cloth data providing apparatus 100 may determine that the acquired images 1915 of the first panels include the left body panel, the right body panel, and the sleeve panel. Also, the 3D cloth data providing apparatus 100 may determine that the acquired images 1925 of the second panels include the bottom left body panel and the bottom right body panel 1927.

According to an example embodiment, the 3D cloth data providing apparatus 100 may generate 3D data of the third cloth by combining the acquired images based on the identified shapes. For example, the 3D cloth data providing apparatus 100 may seam the images of the body panels among the panels of the blouse 1910 and the images of the body panels among the panels of the sleeveless one-piece 1920.

Referring to FIG. 19, the 3D cloth data providing apparatus 100 may generate 3D data 1930 of a long-sleeved one-piece from the images of the first panels of the blouse 1910 and the images of at least some of the second panels of the sleeveless one-piece 1920.

According to an example embodiment, the 3D cloth data providing apparatus 100 may display the generated 3D data 1930 of the long-sleeved one-piece.

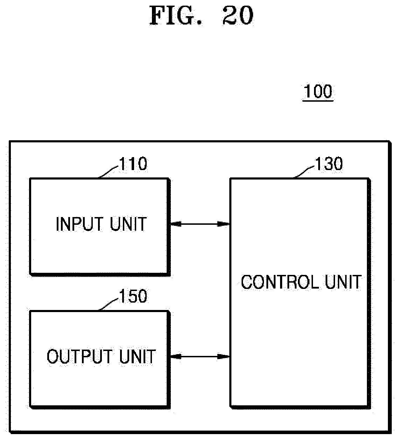

FIG. 20 is a block diagram illustrating an example configuration of a 3D cloth data providing apparatus 100.

As illustrated in FIG. 20, the 3D cloth data providing apparatus 100 according to an exemplary embodiment may include an input unit (e.g., including input circuitry) 110, a control unit (e.g., including processing circuitry) 130, and an output unit (e.g., including output circuitry) 150. However, all the elements illustrated in FIG. 20 are not necessary elements of the 3D cloth data providing apparatus 100. The 3D cloth data providing apparatus 100 may include more elements or less elements than the elements illustrated in FIG. 20.

The input unit 110 acquires images corresponding to panels corresponding to a cloth. Also, according to an exemplary embodiment, the input unit 110 may acquire a 2D image of the cloth.

Also, the input unit 110 may acquire texture information of the cloth. For example, the input unit 110 may include an image acquiring element, such as, for example, a camera (not shown).

According to an example embodiment, the input unit 110 may acquire images corresponding to panels of each of cloths. For example, the input unit 110 may acquire images of the first panels included in the first cloth and images of the second panels included in the second cloth.

The control unit 130 is configured to identify the shape of each of the acquired images. Also, the control unit 130 is configured to determine the types of the panels based on the identified shape of each of the images. The control unit 130 is configured to generate 3D data of the cloth by combining the acquired images based on the determined types of the panels.

According to an example embodiment, the control unit 130 may be configured to identify one or more of the shape, length, slope, and position of the line included in each of the images. Also, the control unit 130 may be configured to acquire the coordinate values of the points included in the line included in each of the images.

Also, according to an example embodiment, the control unit 130 may be configured to identify the type of the panel corresponding to each of the images by comparing the identified shape of each of the images and the pre-stored property information about each panel.

According to an example embodiment, the control unit 130 may be configured to detect information about the shape of the part corresponding to each of the panels in the 2D image of the cloth acquired from the input unit 110 as reference information. The control unit 130 may be configured to detect information about the shape of the part corresponding to each of the panels as reference information and to compare the identified shape of each of the images and the detected reference information.

Also, according to an example embodiment, the control unit 130 may be configured to dispose or arrange the acquired images based on the determined types of the panels. The control unit 130 may be configured to seam the disposed images.

According to an example embodiment, the control unit 130 may be configured to determine the texture of each of the images using the acquired texture information. Also, when there is a distortion in the texture information, the control unit 130 may be configured to correct the distortion of the texture information. According to an example embodiment, when the texture information is changed, the control unit 130 may be configured to change the texture of the generated 3D data of the cloth.

Also, according to an example embodiment, the control unit 130 may be configured to acquire body information of the user. The control unit 130 may be configured to generate 3D data of the user using the acquired body information. The control unit 130 may be configured to combine the 3D data of the user and the 3D data of the cloth.

According to an example embodiment, the control unit 130 may be configured to generate 3D data of the third cloth by combining the acquired images of at least some of the first panels and the acquired images of at least some of the second panels.

The output unit 150 displays the generated 3D data of the cloth. Also, the output unit 150 may display the 3D data of the cloth combined with the 3D data of the user.

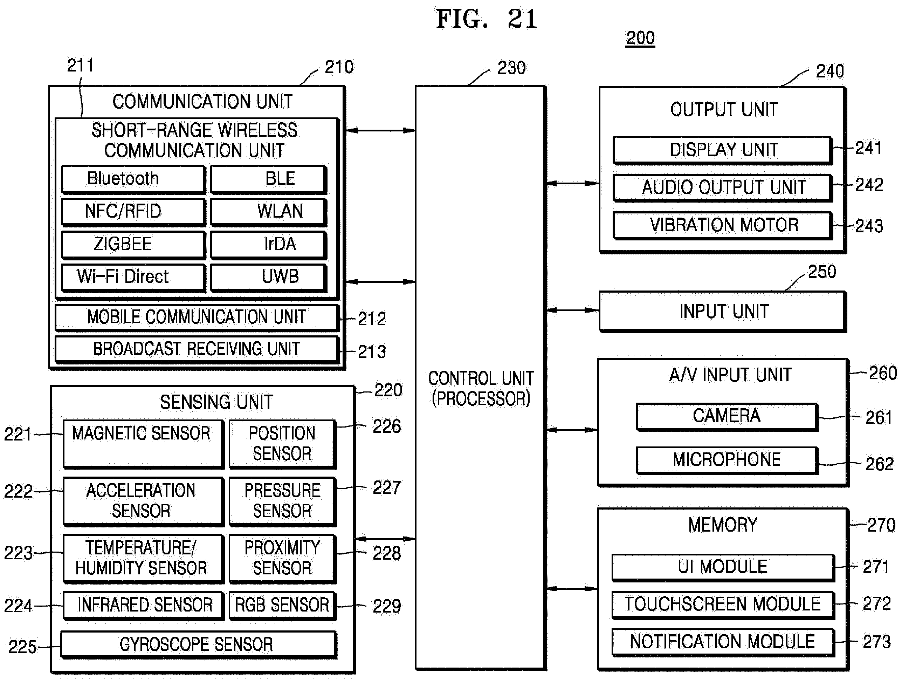

FIG. 21 is a block diagram illustrating another example configuration of a 3D cloth data providing apparatus 200.

For example, as illustrated in FIG. 21, the 3D cloth data providing apparatus 200 according to another example embodiment may include a communication unit (e.g., including communication circuitry) 210, a sensing unit (e.g., including one or more sensors) 220, a control unit (e.g., including processing circuitry) 230, an output unit (e.g., including output circuitry, such as, for example, a display) 240, an input unit (e.g., including input circuitry) 250, an audio/video (A/V) input unit 260, and a memory 270.

The above elements will be described in greater detail below.

The communication unit 210 may include one or more elements (e.g., circuitry) for allowing communication between the 3D cloth data providing apparatus 200 and an external device (not illustrated). For example, the communication unit 210 may include a short-range wireless communication unit 211, a mobile communication unit 212, and a broadcast receiving unit 213. Herein, the communication unit 210 may perform the function of the input unit 110 of the 3D cloth data providing apparatus 100 described above with reference to FIG. 20. For example, the communication unit 210 may acquire images of panels included in a cloth.

The short-range wireless communication unit 211 may include, but is not limited to, a Bluetooth communication unit, a Bluetooth Low Energy (BLE) communication unit, a near field communication unit, a WLAN (WiFi) communication unit, a ZigBee communication unit, an infrared data association (IrDA) communication unit, a WiFi Direct (WFD) communication unit, a ultra wideband (UWB) communication unit, and Ant+ communication unit.

The mobile communication module 212 may transmit/receive wireless signals with at least one of a base station, an external terminal, and a server on a mobile communication network. Herein, the wireless signals may include data such as the 2D image of the cloth and the images of the panels included in the cloth.

The broadcast receiving unit 213 may receive broadcast signals and/or broadcast-related information from external devices through broadcast channels. The broadcast channels may include satellite channels and terrestrial channels. In some exemplary embodiments, the 3D cloth data providing apparatus 200 may not include the broadcast receiving unit 213.

The sensing unit 220 may include one or more sensors that detect the state of the 3D cloth data providing apparatus 200 or the peripheral state of the 3D cloth data providing apparatus 200 and transmit the detected information to the control unit 230. Herein, the sensing unit 220 may perform the function of the input unit 110 described above with reference to FIG. 20. For example, the sensing unit 220 may acquire images of the panels of the cloth.

The sensing unit 220 may include, but is not limited to, one or more of a magnetic sensor 221, an acceleration sensor 222, a temperature/humidity sensor 223, an infrared sensor 224, a gyroscope sensor 225, a position sensor (e.g., GPS sensor) 226, a pressure sensor 227, a proximity sensor 228, and an RGB sensor (illuminance sensor) 229.

Since those of ordinary skill in the art may intuitively infer the respective functions of the sensors included in the sensing unit 220 from the respective names thereof, detailed descriptions thereof will be omitted.

The control unit 230 may include a processor configured to control the overall operations of the 3D cloth data providing apparatus 200. For example, the control unit 230 may be configured to control the overall operations of the communication unit 210, the sensing unit 220, the output unit 240, the input unit 250, the A/V input unit 260, and the memory 270 by executing the programs stored in the memory 270.

The control unit 230 of FIG. 21 may correspond to the control unit 130 of FIG. 20.

The output unit 240 may be configured to perform the operation determined by the control unit 230 and may include, for example, a display unit (e.g., including a display) 241, an audio output unit 242, and a vibration motor 243.

The display unit 241 may display the information processed by the 3D cloth data providing apparatus 200. For example, the display unit 241 may display the generated 3D image of the cloth. Also, the display unit 241 may display the 3D data of the cloth combined with the 3D data of the user.

When the display unit 241 includes a touchscreen with a layer structure of a touch pad, the display unit 241 may also be used as an input device in addition to an output device. The display unit 241 may include one or more of a liquid crystal display (LCD), a thin film transistor liquid crystal display (TFT-LCD), an organic light-emitting diode (OLED) display, a flexible display, a three-dimensional (3D) display, and an electrophoretic display, or the like. Also, the 3D cloth data providing apparatus 200 may include two or more display units 241 according to various example embodiments. In this example, the two or more display units 241 may be disposed to face each other through, for example, a hinge structure.

The audio output unit 242 may output audio data received from the communication unit 210 or stored in the memory 270. Also, the audio output unit 242 may output audio signals related to the functions (e.g., call signal reception, message reception, and notification) performed by the 3D cloth data providing apparatus 200. The audio output unit 242 may include, for example, a speaker and a buzzer.

The vibration motor 243 may output a vibration signal. For example, the vibration motor 243 may output a vibration signal corresponding to an output of audio content or video content (e.g., a call signal reception sound or a message reception sound). Also, the vibration motor 243 may output a vibration signal when a touch is input to the touchscreen.

The input unit 250 may refer to a unit through which the user inputs data for controlling the 3D cloth data providing apparatus 200. For example, the input unit 250 includes input circuitry that may include, but is not limited to, a keypad, a dome switch, a touch pad (e.g., a capacitive overlay type, a resistive overlay type, an infrared beam type, a surface acoustic wave type, an integral strain gauge type, or a piezoelectric type), a jog wheel, and a jog switch.

The input unit 250 may acquire a user input. For example, the input unit 250 may acquire a user input for selecting some of the images of the panels acquired by the 3D cloth data providing apparatus 200.

The A/V input unit 260 may be used to input audio signals or video signals and may include, for example, a camera 261 and a microphone 262. The camera 261 may obtain an image frame such as a still image or a moving image through an image sensor in a video call mode or a photographing mode. The image captured through the image sensor may be processed by the control unit 230 or a separate image processing unit (not illustrated).

The image frame processed by the camera 261 may be stored in the memory 270, or may be transmitted to the outside thereof through the communication unit 210. Two or more cameras 261 may be provided according to the configuration embodiments of the 3D cloth data providing apparatus 200.

The microphone 262 may receive an input of an external audio signal and process the same into electrical audio data. For example, the microphone 262 may receive an audio signal from an external device or a speaker. The microphone 262 may use various noise cancellation algorithms for canceling a noise that may be generated during the input of an external audio signal.

The memory 270 may store a program for processing and control of the control unit 230 and may store input/output data (e.g., the images of the panels included in the cloth, the 2D image of the cloth, and the generated 3D data of the cloth).

The memory 270 may include at least one type of storage medium from among flash memory type, hard disk type, multimedia card micro type, card type memory (e.g., SD and XD memories), random-access memory (RAM), static random-access memory (SRAM), read-only memory (ROM), electronically erasable programmable read-only memory (EEPROM), programmable read-only memory (PROM), magnetic memory, magnetic disk, and optical disk. Also, the 3D cloth data providing apparatus 200 may include a cloud server or a web storage for performing a storage function of the memory 270 on the Internet.

The programs stored in the memory 270 may be classified into a plurality of modules according to their functions and may be classified into, for example, a user interface (Ul) module 271, a touchscreen module 272, and a notification module 273, etc.

The UI module 271 may provide, for example, a specialized UI and a graphical user interface (GUI) that interlock with the 3D cloth data providing apparatus 200 for respective applications. The touchscreen module 272 may sense a touch gesture of the user on the touchscreen and transmit information about the touch gesture to the control unit 230. According to an example embodiment, the touchscreen module 272 may recognize and analyze a touch code. The touchscreen module 272 may include separate hardware including a controller.

Various sensors may be provided in or near the touchscreen to sense a proximity touch or a touch to the touchscreen. An example of the sensor for sensing a touch to the touchscreen may be a tactile sensor. The tactile sensor may refer to a sensor that senses a touch of an object in the degree of a human sense or more. The tactile sensor may sense a variety of information, such as the roughness of a touch surface, the hardness of a touch object, and the temperature of a touch point.

Another example of the sensor for sensing a touch to the touchscreen may be a proximity sensor.

The proximity sensor may refer to a sensor that detects the presence of an object approaching a detection surface or an object located in the proximity thereof without mechanical contact by using an electromagnetic force or infrared rays. Examples of the proximity sensor may include transmission type photoelectric sensors, direct reflection type photoelectric sensors, mirror reflection type photoelectric sensors, high frequency oscillation type proximity sensors, electrostatic capacity type proximity sensors, magnetic type proximity sensors, and infrared proximity sensors, or the like. Examples of the touch gesture of the user may include tap, touch & hold, double tap, drag, panning, flick, drag & drop, and swipe, or the like.

The notification module 273 may generate a signal for notifying the occurrence of an event in the 3D cloth data providing apparatus 200. Examples of the event occurring in the 3D cloth data providing apparatus 200 may include call signal reception, message reception, key signal input, schedule notification, and user input acquisition. The notification module 273 may output a notification signal of a video signal type through the display unit 241, output a notification signal of an audio signal type through the audio output unit 242, and output a notification signal of a vibration signal type through the vibration motor 243.

The apparatuses according to the example embodiments may include, for example, a processor, a memory for storing and executing program data, a permanent storage such as a disk drive, a communication port for communicating with an external device, and user interface (Ul) devices such as a touch panel, keys, and buttons. The methods implemented by software modules or algorithms may be stored on computer-readable recording mediums as computer-readable codes or program commands that are executable on the processor. Examples of the computer-readable recording mediums may include magnetic storage mediums (e.g., read-only memories (ROMs), random-access memories (RAMs), floppy disks, and hard disks) and optical recording mediums (e.g., compact disk read-only memories (CD-ROMs) and digital versatile disks (DVDs)). The computer-readable recording mediums may also be distributed over network-coupled computer systems so that the computer-readable codes may be stored and executed in a distributed fashion. The computer-readable recording mediums are readable by a computer, and may be stored in a memory and executed in a processor.

For the purpose of promoting the understanding of the example embodiments, reference has been made to the example embodiments illustrated in the drawings, and particular terms have been used to describe the example embodiments. However, the scope of the example embodiments is not limited by the particular terms, and the example embodiments may encompass all elements that may be generally conceived by those of ordinary skill in the art, which fall under the scope of the claims.

The example embodiments may be described in terms of functional block components and various processing operations. Such functional blocks may be implemented by any number of hardware and/or software components that execute particular functions. For example, the example embodiments may employ various integrated circuit (IC) components, such as memory elements, processing elements, logic elements, and lookup tables, which may execute various functions under the control of one or more microprocessors or other control devices. Similarly, where the elements of the example embodiments may be implemented by software programming or software elements, the example embodiments may be implemented by any programming or scripting language such as C, C++, Java, or assembly language, with various algorithms being implemented by any combination of data structures, processes, routines, or other programming elements. Functional aspects may be implemented by an algorithm that is executed in one or more processors. Also, the example embodiments may employ the related art for electronic environment setting, signal processing, and/or data processing. Terms such as "mechanism", "element", "unit", and "configuration" may be used in a broad sense, and are not limited to mechanical and physical configurations. The terms may include the meaning of software routines in conjunction with processors or the like.

Particular implementations described herein are merely examples. For the sake of conciseness, descriptions of related art electronic configurations, control systems, software, and other functional aspects of the systems may be omitted. Also, the connection lines or connection members between various elements illustrated in the drawings represent example functional connections and/or physical or logical connections between the various elements, and various alternative or additional functional connections, physical connections, or logical connections may be present in practical apparatuses. Also, no element may be essential to the practice of the example embodiments unless the element is specifically described as "essential" or "critical".

Although a few preferred embodiments have been shown and described, it will be appreciated by those skilled in the art that various changes and modifications might be made without departing from the scope of the invention, as defined in the appended claims.

## Claims

1. A method for providing three-dimensional (3D) data of clothes on an electronic device comprising an input unit, a processor and a display (100), the method comprising:
acquiring a two-dimensional (2D) image of the clothes (S320) and images of panels (110, S310), each panel representing a part of the clothes;
identifying (S340) types of the panels based on shapes of the images of the panels;
determining disposition information of the panels by comparing the 2D image of the clothes and the images of the panels based on the identified types;
seaming (S350, S360) the images of the panels according to the disposition information; and
generating (370, 380) the 3D data (120) of the clothes based on the seamed images.

2. The method of claim 1, wherein the generating of the 3D data of the clothes comprises generating 3D mesh data based on the acquired images of the panels and the identified types of the panels.

3. The method of claim 1, further comprising:
detecting a shape of a part corresponding to each of the panels in the 2D image of the clothes as reference information,
wherein the identifying of the types of the panels comprises:
comparing each of the identified shapes of the images and the detected reference information; and
identifying the types of the panels based on a result of the comparison.

4. The method of claim 1, wherein the seaming of the images of the panels generating comprises:
arranging the acquired images of the panels according to the disposition information; and
seaming the arranged images.

5. The method of claim 1, wherein the generating of the 3D data of the clothes comprises determining texture information of each of the acquired images of the panels.

6. The method of claim 1, further comprising:
acquiring body information of a user;
generating 3D data of the user using the acquired body information; and
combining the 3D data of the user and the 3D data of the clothes.

7. The method of claim 1, wherein the acquiring of the images of the panels comprises acquiring images of at least some of first panels of a first clothes and images of at least some of second panels of second clothes, and
the generating of the 3D data of the clothes comprises generating 3D data of a third clothes by combining the acquired images.

8. An apparatus for providing three-dimensional (3D) data of a cloth, the apparatus comprising:
an input unit configured to acquire a two-dimensional (2D) image of the clothes (S320) and images of panels (110, S310), each panel representing a part of the clothes;
a processor configured to identify (S340)
types of the panels based on shapes of the images of the panels, to determine disposition information of the panels by comparing the 2D image of the clothes and the images of the panels based on the identified types, to seam (S350, S360) the images of the panels according to the disposition information and to generate (S370, S380) the 3D data of the clothes based on the seamed images; and
a display (100) configured to display the generated 3D data (120) of the clothes.

9. The apparatus of claim 8, wherein the processor is configured to generate 3D mesh data based on the acquired images of the panels based on the identified types of the panels.

10. The apparatus of claim 8, wherein
the processor is configured to detect a shape of a part corresponding to each of the panels in the 2D image of the clothes as reference information, to compare each of the shapes of the images and the detected reference information and to identify the types of the panels based on a result of the comparison.

11. The apparatus of claim 8, wherein the process is configured to arrange the acquired images of the panels according to the disposition information and to seam the arranged images.

12. The apparatus of claim 8, wherein the processor is configured to determine texture information of each of the acquired images of the panels.

13. The apparatus of claim 8, wherein
the input unit is configured to acquire body information of a user, and
the processor is configured to generate 3D data of the user using the acquired body information and to combine the 3D data of the user and the 3D data of the clothes.

14. The apparatus of claim 8, wherein
the input unit is configured to acquire images of at least some of first panels included in first clothes and images of at least some of second panels included in second clothes, and
the processor is configured to generate 3D data of third clothes by combining the acquired images.

15. A non-transitory computer-readable recording medium that stores a program which, when executed by a processor, causes the apparatus for providing 3D data of clothes to perform operations recited in claim 1 .

## Patentansprüche

1. Verfahren zum Bereitstellen dreidimensionaler (3D) Daten von Kleidungsstücken in einer elektronischen Vorrichtung, die eine Eingabeeinheit, einen Prozessor und eine Anzeigevorrichtung (100) umfasst, wobei das Verfahren Folgendes umfasst:
Erfassen eines zweidimensionalen (2D) Bildes der Kleidungsstücke (S320) und von Bildern von Stoffbahnen (110, S310), wobei jede Stoffbahn einen Teil der Kleidung repräsentiert;
Identifizieren (S340) von Typen der Stoffbahnen auf der Grundlage von Formen der Bilder der Stoffbahnen;
Bestimmen von Anordnungsinformationen der Stoffbahnen durch Vergleichen des 2D-Bildes der Kleidungsstücke und der Bilder der Stoffbahnen auf der Grundlage der identifizierten Typen;
Nähen (S350, S360) der Bilder der Stoffbahnen gemäß den Anordnungsinformationen und
Erzeugen (370, 380) der 3D-Daten (120) der Kleidungsstücke auf der Grundlage der genähten Bilder.

2. Verfahren nach Anspruch 1, wobei das Erzeugen der 3D-Daten der Kleidungsstücke ein Erzeugen von 3D-Netzdaten auf der Grundlage der erfassten Bilder der Stoffbahnen und der identifizierten Typen der Stoffbahnen umfasst.

3. Verfahren nach Anspruch 1, das ferner Folgendes umfasst:
Detektieren einer Form eines Teils, der jeder Stoffbahn im 2D-Bild der Kleidungsstücke entspricht, als Bezugsinformationen, wobei
wobei das Identifizieren der Typen der Stoffbahnen Folgendes umfasst:
Vergleichen jeder identifizierten Form der Bilder und der detektierten Bezugsinformationen und
Identifizieren der Typen der Stoffbahnen auf der Grundlage eines Ergebnisses des Vergleichs.

4. Verfahren nach Anspruch 1, wobei das Nähen der Bilder der Stoffbahnen Erzeugen Folgendes umfasst:
Anordnen der erfassten Bilder der Stoffbahnen gemäß den Anordnungsinformationen und
Nähen der angeordneten Bilder.

5. Verfahren nach Anspruch 1, wobei das Erzeugen der 3D-Daten der Kleidungsstücke ein Bestimmen von Texturinformationen jedes der erfassten Bilder der Stoffbahnen umfasst.

6. Verfahren nach Anspruch 1, das ferner Folgendes umfasst:
Erfassen von Körperinformationen eines Anwenders;
Erzeugen von 3D-Daten des Anwenders unter Verwendung der erfassten Körperinformationen und
Kombinieren der 3D-Daten des Anwenders und der 3D-Daten der Kleidungsstücke.

7. Verfahren nach Anspruch 1, wobei das Erfassen der Bilder der Stoffbahnen ein Erfassen von Bildern mindestens einiger erster Stoffbahnen erster Kleidungsstücke und von Bildern mindestens einiger zweiter Stoffbahnen zweiter Kleidungsstücke umfasst und
das Erzeugen der 3D-Daten der Kleidungsstücke ein Erzeugen von 3D-Daten dritter Kleidungsstücke durch Kombinieren der erfassten Bilder umfasst.

8. Vorrichtung zum Bereitstellen dreidimensionaler (3D) Daten von Kleidungsstücken, wobei die Vorrichtung Folgendes umfasst:
eine Eingabeeinheit, die konfiguriert ist zum Erfassen eines zweidimensionalen (2D) Bildes der Kleidungsstücke (S320) und von Bildern von Stoffbahnen (110, S310), wobei jede Stoffbahn einen Teil der Kleidung repräsentiert;
einen Prozessor, der konfiguriert ist zum
Identifizieren (S340) von Typen der Stoffbahnen auf der Grundlage von Formen der Bilder der Stoffbahnen, Bestimmen von Anordnungsinformationen der Stoffbahnen durch Vergleichen des 2D-Bildes der Kleidungsstücke und der Bilder der Stoffbahnen auf der Grundlage der identifizierten Typen, Nähen (S350, S360) der Bilder der Stoffbahnen gemäß den Anordnungsinformationen und Erzeugen (S370, S380) der 3D-Daten der Kleidungsstücke auf der Grundlage der genähten Bilder; und
eine Anzeigevorrichtung (100), die konfiguriert ist zum Anzeigen der erzeugten 3D-Daten (120) der Kleidungsstücke.

9. Vorrichtung nach Anspruch 8, wobei der Prozessor konfiguriert ist zum Erzeugen von 3D-Netzdaten auf der Grundlage der erfassten Bilder der Stoffbahnen auf der Grundlage der identifizierten Typen der Stoffbahnen.

10. Vorrichtung nach Anspruch 8, wobei
der Prozessor konfiguriert ist zum Detektieren einer Form eines Teils, der jeder Stoffbahn im 2D-Bild der Kleidungsstücke entspricht, als Bezugsinformationen, zum Vergleichen jeder identifizierten Form der Bilder und der detektierten Bezugsinformationen und zum Identifizieren der Typen der Stoffbahnen auf der Grundlage eines Ergebnisses des Vergleichs.

11. Vorrichtung nach Anspruch 8, wobei der Prozess konfiguriert ist zum Anordnen der erfassten Bilder der Stoffbahnen gemäß den Anordnungsinformationen und zum Nähen der angeordneten Bilder.

12. Vorrichtung nach Anspruch 8, wobei der Prozessor konfiguriert ist zum Bestimmen von Texturinformationen jedes der erfassten Bilder der Stoffbahnen.

13. Vorrichtung nach Anspruch 8, wobei
die Eingabeeinheit konfiguriert ist zum Erfassen von Körperinformationen eines Anwenders und
der Prozessor konfiguriert ist zum Erzeugen von 3D-Daten des Anwenders unter Verwendung der erfassten Körperinformationen und zum Kombinieren der 3D-Daten des Anwenders und der 3D-Daten der Kleidungsstücke.

14. Vorrichtung nach Anspruch 8, wobei
die Eingabeeinheit konfiguriert ist zum Erfassen von Bildern mindestens einiger erster Stoffbahnen, die in ersten Kleidungsstücken enthalten sind, und von Bildern mindestens einiger zweiter Stoffbahnen, die in zweiten Kleidungsstücken enthalten sind, und
der Prozessor konfiguriert ist zum Erzeugen von 3D-Daten dritter Kleidungsstücke durch Kombinieren der erfassten Bilder.

15. Nicht transitorisches computerlesbares Aufzeichnungsmedium, das ein Programm speichert, das, wenn es durch einen Prozessor ausgeführt wird, bewirkt, dass die Vorrichtung zum Bereitstellen dreidimensionaler (3D) Daten von Kleidungsstücken Operationen nach Anspruch 1 durchführt.

## Revendications

1. Procédé pour fournir des données tridimensionnelles (3D) de vêtements sur un dispositif électronique comprenant une unité d'entrée, un processeur et un affichage (100), le procédé comprenant les étapes suivantes :
acquérir une image bidimensionnelle (2D) des vêtements (S320) et des images de panneaux (110, S310), chaque panneau représentant une partie des vêtements ;
identifier (S340) des types de panneaux sur la base de formes des images des panneaux ;
déterminer des informations de disposition des panneaux en comparant l'image 2D des vêtements et les images des panneaux sur la base des types identifiés ;
assembler (S350, S360) les images des panneaux conformément aux informations de disposition ; et
générer (370, 380) les données 3D (120) des vêtements sur la base des images assemblées.

2. Procédé selon la revendication 1, dans lequel la génération des données 3D des vêtements comprend de générer des données de mailles 3D sur la base des images acquises des panneaux et des types de panneaux identifiés.

3. Procédé selon la revendication 1, comprenant en outre les étapes suivantes :
détecter une forme d'une partie correspondant à chacun des panneaux dans l'image 2D des vêtements en tant qu'information de référence,
où l'identification des types de panneaux comprend :
la comparaison de chacune des formes identifiées des images et des informations de référence détectées, et
l'identification des types de panneaux sur la base du résultat de la comparaison.

4. Procédé selon la revendication 1, dans lequel l'assemblement des images des panneaux génération comprend les étapes suivantes :
agencer les images acquises des panneaux conformément aux informations de disposition ; et
assembler les images agencées.

5. Procédé selon la revendication 1, dans lequel la génération des données 3D des vêtements comprend de déterminer des informations de texture de chacune des images acquises des panneaux.

6. Procédé selon la revendication 1, comprenant en outre les étapes suivantes :
acquérir des informations corporelles d'un utilisateur ;
générer des données 3D de l'utilisateur en utilisant les informations corporelles acquises ; et
combiner les données 3D de l'utilisateur et les données 3D des vêtements.

7. Procédé selon la revendication 1, dans lequel l'acquisition des images des panneaux comprend d'acquérir des images d'au moins certains des premiers panneaux de premiers vêtements et d'images d'au moins certains des deuxièmes panneaux de deuxièmes vêtements, et
la génération des données 3D des vêtements comprend de générer des données 3D de troisièmes vêtements en combinant les images acquises.

8. Appareil permettant de fournir des données tridimensionnelles (3D) d'un vêtement, l'appareil comprenant :
une unité d'entrée configurée pour acquérir une image bidimensionnelle (2D) des vêtements (S320) et des images de panneaux (110, S310), chaque panneau représentant une partie des vêtements ;
un processeur configuré pour identifier (S340) les types des panneaux sur la base de formes des images des panneaux, pour déterminer des informations de disposition des panneaux en comparant l'image 2D des vêtements et les images des panneaux sur la base des types identifiés, pour assembler (S350, S360) les images des panneaux conformément aux informations de disposition et pour générer (S370, S380) les données 3D (120) des vêtements sur la base des images assemblées ;
et
un affichage (100) configuré pour afficher les données 3D générées (120) des vêtements.

9. Appareil selon la revendication 8, dans lequel le processeur est configuré pour générer des données de mailles 3D sur la base des images acquises des panneaux en fonction des types de panneaux identifiés.

10. Appareil selon la revendication 8, dans lequel :
le processeur est configuré pour détecter une forme d'une partie correspondant à chacun des panneaux dans l'image 2D des vêtements en tant qu'information de référence, pour comparer chacune des formes des images et les informations de référence détectées et pour identifier les types de panneaux sur la base du résultat de la comparaison.

11. Appareil selon la revendication 8, dans lequel le processus est configuré pour agencer les images acquises des panneaux conformément aux informations de disposition et pour assembler les images agencées.

12. Appareil selon la revendication 8, dans lequel le processeur est configuré pour déterminer les informations de texture de chacune des images acquises des panneaux.

13. Appareil selon la revendication 8, dans lequel :
l'unité d'entrée est configurée pour acquérir des informations corporelles d'un utilisateur ; et
le processeur est configuré pour générer des données 3D de l'utilisateur en utilisant les informations corporelles acquises, et pour combiner les données 3D de l'utilisateur et les données 3D des vêtements.

14. Appareil selon la revendication 8, dans lequel :
l'unité d'entrée est configurée pour acquérir des images d'au moins certains des premiers panneaux inclus dans les premiers vêtements et des images d'au moins certains des deuxièmes panneaux inclus dans les deuxièmes vêtements, et
le processeur est configuré pour générer des données 3D de troisièmes vêtements en combinant les images acquises.

15. Support d'enregistrement non transitoire lisible par ordinateur qui stocke un programme qui, lorsqu'il est exécuté par un processeur, amène l'appareil à fournir des données 3D de vêtements pour exécuter les opérations énoncées dans la revendication 1.
